Europäisches Patentamt

European Patent Office

Office européen des brevets

(11) Publication number: **0 474 117 A1**

## EUROPEAN PATENT APPLICATION

(21) Application number: **91114537.3**

(22) Date of filing: **29.08.91**

(51) Int. Cl.⁵: **C11D 1/40**, B01F 17/00, A01N 25/30

(30) Priority: **04.09.90 US 577020**
**04.04.91 US 680434**
**23.04.91 US 689520**

(43) Date of publication of application:
**11.03.92 Bulletin 92/11**

(84) Designated Contracting States:
**DE ES FR GB SE**

(71) Applicant: **CHAPMAN CHEMICAL COMPANY**
**P.O. Box 9158**
**Memphis Tennessee 38109(US)**

(72) Inventor: **West, Michael H.**
**Rt 1, Box 253-F**
**Sanatioba, Mississippi(US)**

(74) Representative: **Ostertag, Reinhard et al**
**Patentanwälte Dr. Ulrich Ostertag Dr.**
**Reinhard Ostertag Eibenweg 10**
**W-7000 Stuttgart 70(DE)**

(54) Compositions.

(57) A composition includes as its active ingredient a salt or partial salt of
(1) an alkyl amine or a dialkyl amine, and
(2) a phosphonic acid and/or an arthophosphoric acid.

This composition is suitable for dispersing pesticides in water, or for preventing corrosion in the mild steel systems, in which water dilutions of pesticides are used, or for removing organic stains from hard surfaces.

EP 0 474 117 A1

This invention pertains to compositions that include as its active ingredient a salt or partial salt of
(1) an alkyl amine or a dialkyl amine, and
(2) a phosphonic acid and/or an orthophosphoric acid.

A first embodiment of my invention is concerned with compositions suitable for dispersing pesticides in water and compositions containing both a dispersant and a pesticide. In addition, it is concerned with compositions which prevent corrosion in the mild steel systems in which the water dilutions of pesticides are used or dispersed. More particularly, it pertains to compositions comprising the reaction prodcut of (a) an alkyl amine and/or dialkyl amine and (b) a phosphonic acid, to which may be added a water-dispersible solvent, optionally an emulsifier and a compatible pesticide.

It is known that industrial biocides perform better if they are well dispersed in the water in which they are used or applied. It is also known that smaller particles of pesticides give better coverage and better prevent the entrance of pests into treated articles. It is desirable for many uses to produce a true solution of the pesticide which gives molecular size distribution.

I have found that it is possible to produce molecular dispersions in water dilutions of many water-insoluble pesticides by formulating them with such dispersant compositions. I have also found that these molecular dispersions provide unexpectedly good levels of pesticidal activity and that the solutions are non-corrosive to mild steel.

In this embodiment of my invention dispersant composition can be formed by combining the following ingredients:

| | |
|---|---|
| Solvent (water dispersible) | 10-50 parts by wt |
| Commercial Liquid Phosphonic Acid | 10-40 parts by wt |
| alkyl or dialkyl amines | 20-60 parts by wt |
| emulsifier (optional) | 5-25 parts by wt |

Water-dispersible solvents which I have found suitable for producing compositions in accordance with this first embodiment comprise, but are not limited to, alcohols, glycols, and glycol ethers. The water-dispersible solvent may also consist partly or totally of water itself.

Commercial liquid phosphonic acids which I have found useful for the compositions of this first embodiment comprise, but are not limited to, the following:

Phosphonic acid, {nitrolotris (methylene)} tris
Phosphonic acid,
{{{bis{2-bis(phosphonomethyl)amino}ethyl}amino} - methyle
Phosphonic acid, (1-hydroxyethylidene)bis-
Polyhexylene polyamino polymethylene phosphonic acid

Alkyl and dialkyl amines I have found useful for compositions of this first embodiment comprise, but are not limited to, dodecyl dimethylamine,didecyl methyl amine, dodecyl amine, decyl dimethyl amine,cocodimethyl amine, N, N-dimethylcocoamine, cocoalkyldimethylamines and dicoco methyl amine.

Emulsifiers or surfactants that I have found useful for compositions of this first embodiment comprise, but are not limited to cocodimethyl ammonium chloride, didecyl dimethyl ammonium chloride, alkyl benzyl dimethyl ammonium chlorides, and alkylphenol ethylene oxide adducts. Emulsifiers or surfactants make a better product,but since they are not absolutely essential, I consider that they are optional ingredients.

Pesticides which I have found useful when dispersed by compositions of the first embodiment comprise, but are not limited to, commercial compositions of polyphase, azaconazole, 2,5-dichloro 2 n-octyl-3-isothiazoline, and Tebuconazole. Useful ranges of pesticides formulated with compositions of the current invention are from about 1 to about 20 parts by weight per 100 parts by weight of the composition.

Dispersant compositions according to this first embodiment were formulated with pesticides and used for treating wood, textiles, paper, tile, brick, concrete and leather. Treating dilutions in water of from 0.1% to 10% according to the generalized formula gave control of biological growths on the treated articles which were as good or better than that offered by commercially accepted products at similar use dilutions. Compositions according to the first embodiment with the above mentioned pesticides were also tested to determine control of algal, fungal, and bacterial slimes in water. At treating levels from 0.1% to 1%,all slimes were controlled. All of the compositions were tested at 1% in water and found to be non-corrosive to mild steel.

My dispersant composition may be combined with a pesticide in a number of different ways. For instance, the dispersant composition can be mixed with water (e.g. 100 parts of water per one part of dispersant composition) and then combined with .1 - 1.0 part of the pesticide formulation. The combination then may be further diluted with water, the degree of dilution depending upon the particular situation to be treated. This is largely a matter of routine testing that those working in this art can readily carry out in order to obtain optimum results.

The following examples illustrate some specific formulations that were prepared in accordance with the first embodiment of my invention.

| EXAMPLE I | |
|---|---|
| Ingredients | Parts by Weight |
| Propylene Glycol, methyl ether | 25 parts |
| Monsanto Dequest 2010 (phosphonic acid) | 15 parts |
| Ethyl ADMA 12 (amine) | 45 parts |
| GAF Igepal CO-530 (emulsifier) | 10 parts |
| Troy Polyphase AF-1 (pesticide) | 15 parts |

| EXAMPLE II | |
|---|---|
| Ingredients | Parts by Weight |
| Ethanol, denatured | 30 parts |
| Lonza Unihib 1704 (phosphonic acid) | 10 parts |
| Ethyl DAMA 1010 (amine) | 40 parts |
| Stepan BTC 1010 (emulsifier) | 15 parts |
| Rohm and Haas Kathon 930 (pesticide) | 5 parts |

| EXAMPLE III | |
|---|---|
| Ingredients | Parts by Weight |
| Propylene Glycol | 25 parts |
| Monsanto Dequest 2010 (phosphonic acid) | 20 parts |
| Ethyl ADMA 10 (amine) | 40 parts |
| Igelpal CO-630(emulsifier) | 10 parts |
| Bayer AG Tebuconazole (pesticide) | 5 parts |

| EXAMPLE IV | |
|---|---|
| Ingredients | Parts by Weight |
| Propylene Glycol, Methyl Ether | 15 parts |
| Albricht and Wilson Briquest 301-50-A (phosphonic acid) | 15 parts |
| Ethyl ADMA-12 (amine) | 45 parts |
| GAF Igepal CO-530 (emulsifier) | 10 parts |
| Troy Polyphase AF-1 (pesticide) | 15 parts |

EP 0 474 117 A1

| EXAMPLE V | |
|---|---|
| Ingredients | Parts by Weight |
| Propylene Glycol, methyl ether | 10 parts |
| Monsanto Dequest 2010 (phosphonic acid) | 15 parts |
| N,N-dimethylcocoamine | 45 parts |
| GAF Igepal CO-530 (emulsifier) | 15 parts |
| Troy Polyphase AF-1 (pesticide) | 15 parts |

In the above examples the ingredients identified by trademarks are believed to have the following chemical constitution

Bayer AG Tebuconazole is a-{2-(4-chlorophenyl)ethyl}-a-(1,1-dimethylethyl)-1H-1,2,4-triazole-1-ethanol.

Monsanto Dequest 2010 is Phosphonic acid (1-hydroxyethylidene) bis (60% in water).

GAF Igepal CO-530 is Poly (oxy-1,2-Ethandiyl), Alpha (Nonylphenyl)-Omega-Hydroxy.

Ethyl ADMA-12 is dodecyldimethylamine.

Lonza Unihib 1704 is Polyhexylene Polyamino polymethylene phosphonic acid (45% in water).

Ethyl DAMA-1010 is didecyldimethylamine.

Stephan BTC-1010 is 50% didecyl dimethyl ammonium chloride in water-alcohol solvent.

Rohm-Haas Kathon 930 is 30% 4,5-Dichloro-2-n-octyl-3-isothiazoline in xylene.

Igepal CO-630 is Nonylphenoxypoly (Ethylene-oxy) Ethanol-9EO.

Ethyl ADMA 10 is decyldimethylamine.

Briquest 301-50-A is Phosphonic acid, {nitrilotiris (methylene} tris.

Troy Polyphase AF-1 is 40% 3-iodo-2-Propynyl Butyl Carbamate with 25% Hi-Flash aromatic naphtha, 15% dipropylene glycol, and 15% DMSO (Dimethyl sulfoxide).

As a further example the following pesticide formulation was prepared

| 3-Iodo-2-Propynyl Butyl Carbamate | 40% by wt |
|---|---|
| Hi-Flash Aromatic Naphtha | 25% by wt |
| Dipropylene Glycol | 15% by wt |
| DMSO (Dimethyl Sulfoxide) | 15% by wt |

and also a dispersant composition that included

| Propylene Glycol, methyl ether | 30% by wt |
|---|---|
| Phosphonic Acid (1-hydroxyethylidene)bis (60% in water) | 15% by wt |
| Dodecyldimethyl amine | 45% by wt |
| Poly (oxy-1,2-Ethanediyl), Alpha-(Nonylphenyl)-Omega-Hydroxy | 10% by wt |

One part of the dispersant composition was added to 100 parts water, then one tenth of one part of the liquid pesticide formulation was added. When tested for control of sapstain on freshly cut lumber, this formulation gave better control than commercial products.

It will be apparent that a number of different formulation combinations must be tested to find one with optimum physical and efficacy properties. With the information given in this disclosure, the skilled chemist will be able to develop formulations of dispersant compositions and compatible pesticides with optimum physical and biological properties for a particular application.

A second embodiment of my invention pertains to a method for removing stains from stained surfaces which comprises, applying to such surfaces a stain removing amount of a liquid containing the reaction product of a phosphonic acid and an alkyl amine. The reaction products can be used in combination with known formulation improvers and other components. The liquid can be water or an organic solvent such as an alcohol (e.g. ethyl alcohol) or a glycol (e.g. propylene glycol) or a combination of water and an organic solvent. The surface that is stained can be wood, composition roofing, brick, hard plastic, and similar surfaces.

Such a composition is applied in quantities and concentrations which will remove stains. This can be readily determined by simple routine experimentation. The concentration of the above reaction products in the liquid is preferably within the range from about one percent to about fifty percent by weight.

4

In contrast to known bleaches, the compositions according to this second embodiment show residual action, and the surfaces to which it is applied are not attacked by an oxidizing or reducing action. The action of such compositions is mild and gradual, reaching a maximum in a week or sometimes several weeks after application. The method can also be applied to unstained hard surfaces in order to prevent the development of stains.

Phosphonic acids suitable for use in forming the above stain removal reaction product include but are not limited to Phosphonic Acid (1-hydroxyethylidene) bis, Polyhexylene Polyamino-polymethylene phosphonic acid and Phosphonic Acid, {nitrilotris(methylene)} tris.

Amines are suitable for use in forming the above stain removal product comprise but are not limited to dodecyldimethylamine, dodecylamine, didecylmethylamine, didecyldimethylamine, cocodimethylamine and cocoamine.

The following examples illustrate some specific formulations which were prepared in accordance with the second embodiment of my invention.

| Example 1 | |
|---|---|
| Ingredients | Parts by Weight |
| Phosphonic acid (1-hydroxyethlidene) bis (60% in Water) | 2 |
| Cocodimethylamine | 6 |
| Water | 92 |

| Example 2 | |
|---|---|
| Polyhexylene Polyamino polymethylene phosphonic acid (45% in Water) | 3 |
| Cocoamine | 6 |
| Ethyl alcohol | 41 |
| Water | 50 |

| Example 3 | |
|---|---|
| Phosphonic acid,{nitrolotris(methylene)} bis | 2 |
| Didecylmethylamine | 6 |
| Propylene Glycol | 42 |
| Water | 50 |

Compositions of these and other examples were used for treating surfaces of wood, textiles, tile, brick and concrete by spraying, brushing, and dipping. Removal of stains was comparable to that achieved by commercial stain removers when evaluated one month after application. Such liquid compositions can be applied by a brush or a spray application. No scrubbing is required. It is recommended that treated surfaces be rinsed off with water after one week. Stored liquid composition should be shaken or stirred before use.

As a third embodiment of my invention I have produced compositions which are:

(1) suitable for dispersing pesticides in water, or

(2) suitable for bleaching organic stains from hard surfaces, or

(3) suitable as corrosion inhibitors,

and such compositions may comprise the reaction product of

(a) an alkyl amine or dialkyl amine and

(b) an orthophosphoric acid

together with a compatible solvent for such reaction product.

I have found that it is possible to produce molecular dispersions in water dilutions of many water-insoluble pesticides by formulating them with the dispersant compositions of the present invention. I have also found that these molecular dispersions provide unexpectedly good levels of pesticidal activity and that the solutions are non-corrosive to mild steel.

5

Accordingly, the third embodiment of my invention involves compositions formed by combining the following ingredients:

| | |
|---|---|
| solvent (water dispersible) | 10-50 parts by wt |
| an Orthophosphoric Acid | 10-40 parts by wt |
| an alkyl or dialkyl amine | 20-60 parts by wt |
| an emulsifier | 0-25 parts by wt |

Water-dispersible solvents which I have found suitable for producing compositions in accordance with this third embodiment comprise, but are not limited to, alcohols,glycols, and glycol ethers. The water-dispersible solvent may also consist partly or totally of water itself.

Alkyl and dialkyl amines that I have found useful for compositions of this third embodiment comprise, but are not limited to, dodecyl dimethylamine, didecyl methyl amine, dodecyl amine, decyl dimethyl amine, cocodimethyl amine, N, N-dimethylcocoamine, cocoalkyldimethylamines and dicoco methyl amine.

Emulsifiers or surfactants that I have found useful for compositions of this third embodiment comprise, but are not limited to, cocodimethyl ammonium chloride, didecyl dimethyl ammonium chloride, alkyl benzyl dimethyl ammonium chlorides, and alkylphenol ethylene oxide adducts. Emulsifiers or surfactants make a better product, but since they are not absolutely essential, I consider that they are optional ingredients.

When such a composition is used to disperse a pesticide the ingredients and their amounts are preferably as follows:

| Chemical Ingredient | Range of Amounts Parts by Weight |
|---|---|
| Solvent | 10 - 40 |
| Emulsifier | 0 - 20 |
| Orthophosphoric acid (85% in water) | 5 - 15 |
| Pesticide | 3 - 9 |
| Amine | 30 - 60 |

The range of dilutions in parts of ingredients per part of water or solvent may be from about 1 - 10 to about 1 - 300.

A specific example of such a composition would be

| Chemical Ingredient | Parts by Weight |
|---|---|
| Propylene Glycol, methylether (solvent) | 26 |
| Poly(oxy-1,2-Ethandiyl), Alpha (Nonylphenyl)-Omega-Hydroxy (emulsifier) | 15 |
| Orthophosphoric acid (85% in water) | 8 |
| 3-Iodo-2-Propynyl Butyl Carbamate (pesticide) | 6 |
| Cocodimethylamine | 45 |

The carbamate pesticide and may be replaced by other pesticides.

As a fourth embodiment of my invention I contemplate that the compositions according to the third embodiment may also contain 1 - 15 parts by weight of a phosphonic acid. In this regard commercial liquid phosphonic acids which I have found useful comprise, but are not limited to the following:

Phosphonic acid, {nitrolotris (methylene)} tris

Phosphonic acid, {{{bis{2-bis(phosphonomethyl)amino]ethyl]amino}-methyle

Phosphonic acid, (1-hydroxyethylidene)bis-

Polyhexylene polyamino polymethylene phosphonic acid

A specific example of a composition containing both an amine, an orthophonic acid and a phosphoric acid would be as follows:

| Chemical Ingredient | Parts by Weight |
|---|---|
| Propylene Glycol, methylether (solvent) | 30 |
| Poly(oxy-1,2-Ethanidiyl),(Alpha(Nonylphenyl)- Omega-Hydroxy (Emulsifier) | 5 |
| Orthophosphoric Acid (85% in water) | 5 |
| Coco Dimethylamine | 50 |
| Phosphonic acid (1-hydroxyethylidene)bis (60% in water) | 10 |

Compositions according to the above third and fourth embodiments of the invention can be used for bleaching organic stains on firm surfaces, or as a corrosion inhibitor, or as a dispersant for insecticides.

Pesticides which I have found useful when dispersed by compositions of the above third and fourth embodiments comprise, but are not limited to, commercial compositions of polyphase, azaconazole, 2,5-dichloro 2-n-octyl-3-isothiazoline, and Tebuconazole. Useful ranges of pesticides formulated with such compositions are from about 1 to about 20 parts by weight per 100 parts by weight of the composition.

Dispersant compositions of the third and fourth embodiments formulated with pesticides were used for treating wood, textiles, paper,tile, brick, concrete and leather. Treating dilutions in water of from 0.1% to 10% according to the generalized formula gave control of biological growths on the treated articles which were as good or better than that offered by commercially accepted products at similar use dilutions. Such compositions with the above mentioned pesticides were also tested to determine control of algal, fungal, and bacterial slimes in water. At treating levels from 0.1% to 1%, all slimes were controlled. All of the compositions were tested at 1% in water and found to be non-corrosive to mild steel.

My dispersant composition may be combined with a pesticide in a number of different ways. For instance, the dispersant composition can be mixed with water (e.g. 100 parts of water per one part of dispersant composition) and then combined with .1 - 1.0 part of the pesticide formulation. The combination then may be further diluted with water, the degree of dilution depending upon the particular situation to be treated. This is largely a matter of routine testing that those working in this art can readily carry out in order to obtain optimum results.

The following composition is useful for bleaching organic stains such as iron tannates from hard surfaces such as wood and vinyl:

| Ingredients | Parts by Weight |
|---|---|
| Cocodimethylamine | 4.5 |
| Phosphoric acid (1-hydroxyethylidene) bis (60% in water) | 1.5 |
| Water | 94.0 |

It will be apparent that a number of different formulation combinations must be tested to find the one with optimum physical and efficacy properties. With the information given in this disclosure the skilled chemist will be able to both develop formulations of dispersant compositions and compatible pesticides with optimum physical and biological properties for a particular application,as well as bleaching compositions for removing organic stains from hard surfaces.

## Claims

1. A composition which includes the reaction product of
   (a) an alkyl amine or a dialkyl amine and
   (b) a phosphonic acid and/or an orthophosphoric acid.

2. A composition according to Claim 1, wherein the alkyl amine is N,N-dimethylcocoamine.

3. A composition according to Claim 1 or 2, wherein the phosphonic acid is phosphonic acid (1-hydroxyethylidene)bis-.

4. A composition according to one of Claims 1 to 3, which includes poly(oxy-1,2-Ethanediyl), Alpha-(Nonylphenyl)-omega-hydroxy- as an emulsifier.

5. A dispersant formulation according to one of Claims 1 to 4 comprising

```
Solvent (water dispersible)            10-50 parts by wt
Commercial Liquid Phosphonic Acid or
orthophosphoric acid (85% in water)    10-40 parts by wt
An alkyl amine or a dialkyl amine      20-60 parts by wt
```

6. A composition according to one of Claims 1 to 5, which also includes a pesticide and an emulsifier.

7. A method for removing stains from hard surfaces, which comprises applying thereto a liquid which contains 1-50% by weight of the reaction product of
   (a) an alkyl amine and
   (b) a phosphonic acid.

European
Patent Office

EUROPEAN SEARCH
REPORT

Application Number

EP 91 11 4537

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 013 450 (PROCTER & GAMBLE LTD)<br>* Abstract; page 1, line 7 - page 2, line 3; page 4, line 1 - page 8, line 32; example VI * | 1,2,4,5 | C 11 D 1/40<br>B 01 F 17/00<br>A 01 N 25/30 |
| | – – – | | |
| X | EP-A-0 199 383 (PROCTER & GAMBLE CO.)<br>* Example IX * | 1 | |
| | – – – | | |
| X | EP-A-0 314 232 (UNILEVER N.V.)<br>* Page 2, line 3 - page 3, line 12; page 3, line 21 - page 4, line 36; example 1 * | 1,7 | |
| | – – – | | |
| P,X | EP-A-0 417 987 (UNILEVER PLC)<br>* Example II, table 3 * | 1 | |
| | – – – | | |
| X | DD-A-86 457 (HERBACIN PG)<br>* Example 2; claim 2 * | 1,4,6 | |
| | – – – | | |
| A | EP-A-0 224 846 (HOECHST AG)<br>* Page 2, lines 6-32; page 5, lines 26-35; page 6, lines 14-22 * | 4,6 | |
| | – – – – – | | |

|  | TECHNICAL FIELDS SEARCHED (Int. Cl.5) |
|---|---|
| | C 11 D<br>B 01 F |

The present search report has been drawn up for all claims

| Place of search | Date of completion of search | Examiner |
|---|---|---|
| The Hague | 03 October 91 | FISCHER W.H.F. |